# EUROPEAN PATENT APPLICATION

(11) **EP 3 178 549 A1**
(43) Date of publication of application: **14.06.2017**
(21) Application number: 16201750.3
(22) Date of filing: 01.12.2016
(51) Int. Cl.: B01J 19/24

(54) **TUBULAR REACTOR WITH TEMPERATURE CONTROL FLUID AND HEAT-EXCHANGER MEANS**

(30) Priority: 09.12.2015 GB 201521670
(71) Applicant: Blacktrace Holdings Limited, Royston Hertfordshire SG8 5HW (GB)
(72) Inventor: Homewood, Philip, Enfield, Middlesex EN2 0HB (GB); Gilligan, Mark, Royston, Hertfordshire SG8 5DS (GB); Hawes, Mike, Benington, Hertfordshire SG2 7DD (GB); Lovatt, Andrew, Cambridge, Cambridgeshire CB23 1HR (GB); Crisp, Paul, Elsworth, Cambridgeshire CB23 4JT (GB); Taylor, Benjamin, Duxford, Cambridgeshire CB22 4RH (GB); Kenyon, Hannah, Cambridge, Cambridgeshire CB4 2EQ (GB)
(74) Representative: Boult Wade Tennant

(57) **Abstract**

A reactor device (100) for reaction fluid comprising a reaction vessel (102) comprising: an end cap (104) comprising at least one passage (112) for the reaction fluid; and at least one tube (116) which extends through the reaction vessel (102). The reaction vessel is operable to receive a control fluid outside the at least one tube (116) for controlling the temperature inside the at least one tube (116). A manifold (200) is connectable to the end cap (104) and comprises at least one channel (206) for reaction fluid. An outlet (208) from the manifold (200) is in fluid communication with the tube (116). The end cap (104) has a thermal conductivity of greater than 1 watt per square meter kelvin to provide a thermal coupling between the control fluid and the manifold (200).

## Description

The present invention relates to a reactor device for reaction fluid.

### BACKGROUND RELATING TO THE PRIOR ART

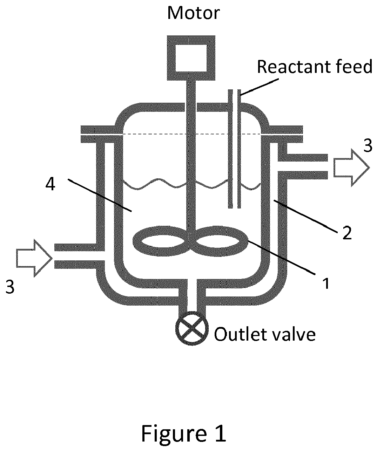

Traditionally, large scale chemical reactions are carried out as batch processes, typically using stirred tank reactors as shown in Figure 1, where the reactants 4 are mixed by a rotary stirrer 1 and the temperature is controlled by an outer jacket 2 with a thermofluid 3 circulating through the jacket. The large reactant volume of batch reactors, typically 1 litre - 1000litres, and relatively limited area for heat exchange, results in poor temperature control when running exothermic and endothermic reactions. In addition mixing performance in batch reactors is poor resulting in variations in reactant concentration, in particular during reactant addition.

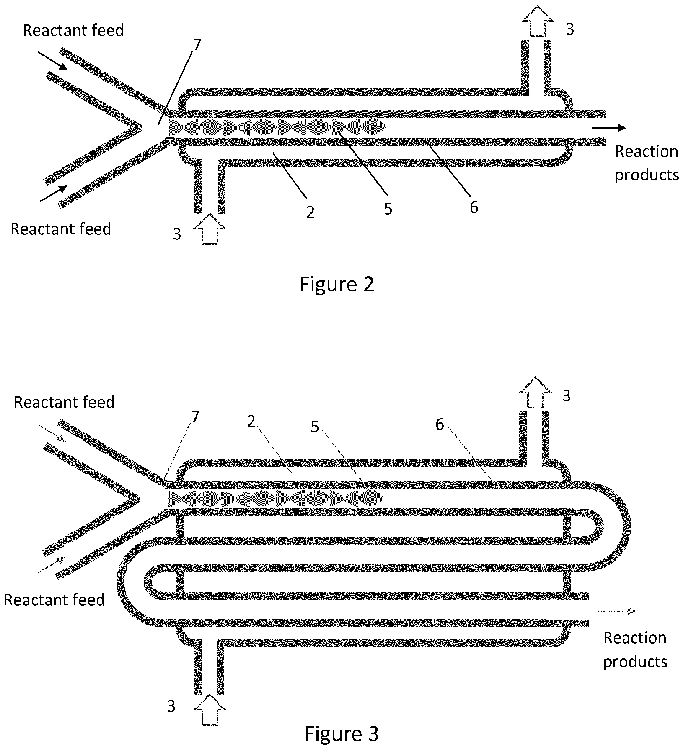

An alternative to a batch reaction process is to use a flow reactor. An example flow reactor is shown in Figure 2 which consists of a junction 7 for combining the reactants, a pipe or channel 6 through which the reactant mixtures flow and react, a static mixer 5 to mix the two reactants together, an outer jacket 2 to control the temperature with a thermofluid 3 circulating through the jacket.

Typically the reactant streams are brought up (or down) to the reaction temperature before they are fed into the reactor. The static mixer provides rapid mixing which ensures that the reactant concentration is consistent in the reactor, resulting in a higher quality reaction product. For a flow reactor the area of heat transfer is typically large relative to the reactor volume which results in significantly improved temperature control for exothermic and endothermic reactions.

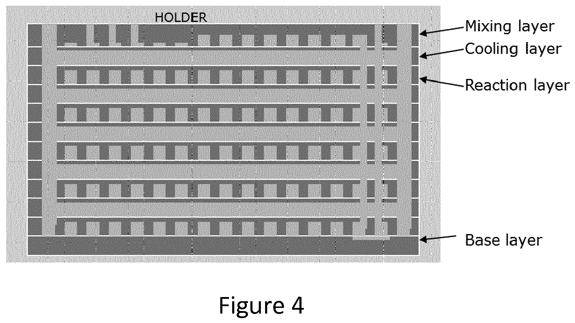

Examples of other existing flow reactors are described with reference to Figures 3 and 4.

Figure 3 is a shell and tube flow reactor which typically consists of a metal pipe for the reactants and an outer metal shell. The construction is similar to a shell and tube heat exchanger. This type of reactor is commonly fabricated from metal tube and sheet. Fabrication in glass is possible but generally more challenging.

Figure 4 shows a stacked plate flow reactor which consists of a number of metal or glass layers with channels formed in the top surface of each layer which are sealed by diffusion bonding (or similar) to the layer above. In this example the reactant mixture will flow on alternate layers with the thermofluid flowing on the other layers to provide good heat exchange performance between the reaction fluid and thermofluid streams. Stacked plate reactors are also known as microreactors, in particular when the channel diameter is <1 mm. When stacked plate reactors are scaled up in volume, for instance to greater than 10ml internal volume the manufacturing costs start to rise significantly, in particular for glass plate reactors.

Other prior art includes US 3,976,129 which shows a heat exchanger defining a tank through which extends a spiral shaped tube; and Figure 1 from EP 1,965,900 which shows a crystallisation apparatus having a temperature controlled tube.

### SUMMARY OF THE INVENTION

According to a first aspect of the present invention, there is provided a reactor device for reaction fluid comprising:
a reaction vessel comprising:
   an end cap comprising at least one passage for the reaction fluid; and
   at least one tube which extends through the reaction vessel, wherein the or each tube comprises a first end, and a second end extending through the reaction vessel and defining an opening providing fluid communication out of the reaction vessel;
   wherein the reaction vessel is operable to receive a control fluid outside the at least one tube for controlling the temperature inside the at least one tube;
a manifold connectable to the end cap and comprising at least one channel for the reaction fluid extending between at least one inlet and at least one outlet;
wherein the or each outlet from the manifold is in fluid communication with the first end of a respective tube extending through a passage in the end cap;
wherein the end cap has a thermal conductivity of greater than 1 watt per square meter kelvin to provide a thermal coupling between the control fluid and the manifold.

In this way, excess heat/cold in the reaction vessel can be transmitted to the manifold via the end cap, such to bring the temperature of the reaction fluid inside the manifold towards the temperature of the reaction fluid inside the reaction vessel.

To further improve the thermal coupling between the control fluid and the manifold, the end cap may have a thermal conductivity of greater than 10 watts per square meter kelvin, preferably 25 watts per square meter kelvin, more preferably 50 watts per square meter kelvin, or even more preferably 100 watts per square meter kelvin.

Preferably the end cap, or a portion of the end cap, is detachable. In this way, the inside of the reaction vessel can be easily accessed, allowing easier maintenance of the reaction vessel.

To make the manifold easier to handle and maintain, preferably the manifold is a block.

To prevent damage to the manifold when it is in use, and to improve the thermal coupling between the manifold and the end cap, preferably the manifold sits on the end cap. In this case, the manifold may sit within a cavity located in the top cap.

Although control fluid inside the reaction vessel may be periodically refilled by detaching the end cap from the rest of the reaction vessel, preferably the reaction vessel comprises an entry port and an exit port for changing the control fluid inside the reaction vessel.

The at least one inlet of each channel may comprise a first inlet for receiving a first reaction fluid and a second inlet for receiving a second reaction fluid, wherein each channel comprises a region downstream of the first and second inlets for combining the first and second reaction fluids. In this way, two separate reaction fluids can be introduced into the device and then mixed inside the manifold.

If there is a plurality of channels inside the manifold, these channels may not necessarily be connected to each other, thus allowing two different reaction fluid flows to pass independently through the manifold.

The or each channel preferably comprises a region defining a tortuous path for reaction fluid flowing through the channel. Due to the direction changes in the tortuous path, mixing of the reaction fluid as it passes through the manifold is improved.

Mixing of the reaction fluid in each channel may also be improved by adding a region in the channel where it splits and then recombines.

If there is a plurality of tubes inside the reaction vessel, each of these may be connected to the same outlet from the manifold, or each connected to a different outlet in the manifold. In some cases, the plurality of tubes may not be connected to each other, thus allowing two different reaction fluid flows to pass separately through the reaction vessel.

To maximise the time that the reaction fluid can react inside the at least one tube, preferably each tube forms a spiral inside the reaction vessel. Other than a spiral, each tube may have any other shape that maximises the length of the tube inside the reaction vessel.

Preferably, the internal diameter of each tube is between 1mm-10mm. Within this range, the internal diameter of the tube is preferably less than 5mm as above this amount, fluid flow within each tube tends to stratify, rather than form as a plug/slug, thus making the fluid flow more difficult to handle.

In some cases, a mixing device may be located in each tube for mixing the fluid passing through the tube.

Preferably, the device comprises a temperature sensor for measuring the temperature of fluid inside the device, or for measuring the temperature of the reaction fluid. The temperature sensor may be located in a channel(s) of the manifold, or in a tube(s). A temperature sensor may additionally/alternatively be located to measure the temperature of the control fluid inside the reaction vessel. As required, the temperature sensor may be supplemented or replaced with any other sensor(s) for measuring a property (for instance, but not limited to, the pressure / composition / absorption / optical properties / pH / turbidity) of the fluid inside the device.

The reactor device may comprise a sampling port for extracting a sample of fluid from the device.

Preferably at least one of the manifold and a portion of the reactor vessel, such as each tube is made of glass. The benefits of glass include excellent chemical resistance and that it allows good visibility inside the tube/manifold. Glass is also a material that chemists are very familiar with as it is commonly used for lab-scale reactions.

In some cases, at least one of the manifold and the tube may be made of a chemically resistive metal/metal alloy, such as stainless steel or Hastelloy® (a Nickel based alloy). Use of these materials would be beneficial if the device needs to withstand high thermal stresses or temperature differentials.

Preferably the manifold comprises a base layer and a top layer which are bonded together, wherein a channel from the manifold is formed at the interface between the two layers.

Preferably, the device comprises a first end at which the manifold is located, and a second end opposite the first end. In this case, the second end of each tube may be located in the second end of the device.

Alternatively, the second end of each tube may be located in the first end of the device. Here, the second end of each tube may be in fluid communication with a further fluid channel in the manifold.

In a second aspect of the invention, there is provided a reactor assembly comprising a first reactor device as described above, and a second reactor device for the reaction fluid comprising:
a reaction vessel comprising:
   an end cap comprising at least one opening for the reaction fluid; wherein the end cap of the second reactor device is connectable to the end cap from the first reactor device, such that reactor fluid can flow via the at least one opening from the second reactor device into an inlet of a channel of the first reactor device.

Preferably, the manifold from the first reactor device is locatable between the end cap of the first reactor device and the end cap of the second reactor device to fluidly connect the two reaction vessels, and so that the manifold is protected from accidental damage.

In its most basic form, the second aspect of the invention therefore provides a modular system where two (or more) reaction vessels can be connected in series as required to generate the necessary reaction conditions required for a given reaction.

As will be appreciated, the second reactor device may further comprise any/all of the other features described according to the first aspect of the invention.

### BRIEF DESCRIPTION OF THE FIGURES

The invention will now be described with reference to the accompany Figures in which:
Figure 1 shows a first prior art reactor device;
Figure 2 shows a second prior art reactor device;
Figure 3 shows a third prior art reactor device;
Figure 4 shows a fourth prior art reactor device;
Figure 5 shows a cross section view of a first embodiment reactor device;
Figures 6A and 6B show perspective views of two different manifolds that are suitable for use with the reactor device of Figure 5;
Figure 7 shows a cross section view of a second embodiment reactor device;
Figures 8A and 8B show a cross section view of a portion of the reactor device from Figure 7;
Figure 9 shows a cross section view of a third embodiment reactor device;
Figure 10 shows a cross section view of a reactor assembly comprising two reactor devices connected in series;
Figure 11A shows a first side view of an exemplary reactor device;
Figure 11B shows a second side view of the reactor device from Figure 11 A;
Figure 11C shows a bottom view of the reactor device from Figure 11 A; and
Figure 11D shows a reactor assembly comprising two of the reactor devices from Figures 11A-11C connected together;
Figures 12A and 12B show cross section views of possible other reactor devices; and
Figure 13 shows a cross section view of another possible reactor device connected to a portion of a separate reactor device.

### DETAILED DESCRIPTION

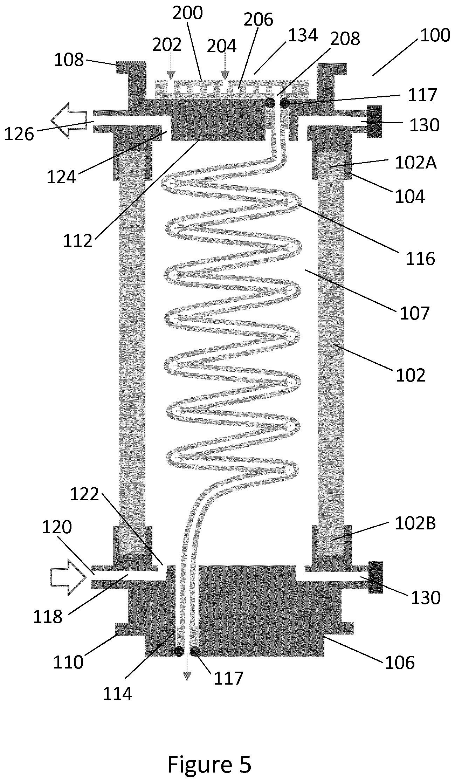

With reference to Figure 5, there is shown a reactor device 100. The device 100 is formed of a generally cylindrical reaction vessel 102 that has an open first end 102A and an open second end 102B. The first open end 102A is closed off by a top end cap 104, and the second end 102B is closed off by a bottom end cap 106. Together the reaction vessel 102 and the two end caps 104;106 define a space 107 for the receipt of a preheated/precooled control fluid.

The reaction vessel 102 is preferably made of glass or a chemically resistant metal/metal alloy. Each of the top cap 104 and the bottom cap 106 is predominately made of a material(s) with good thermal conductivity, such as metal (for example stainless steel or aluminium). In this way, when the device is used, the end caps 104;106 are heated/cooled towards the temperature of the control fluid inside the space 107.

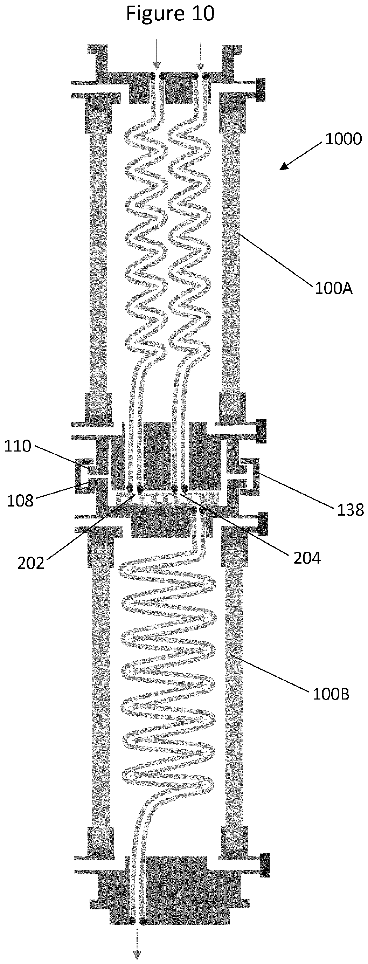

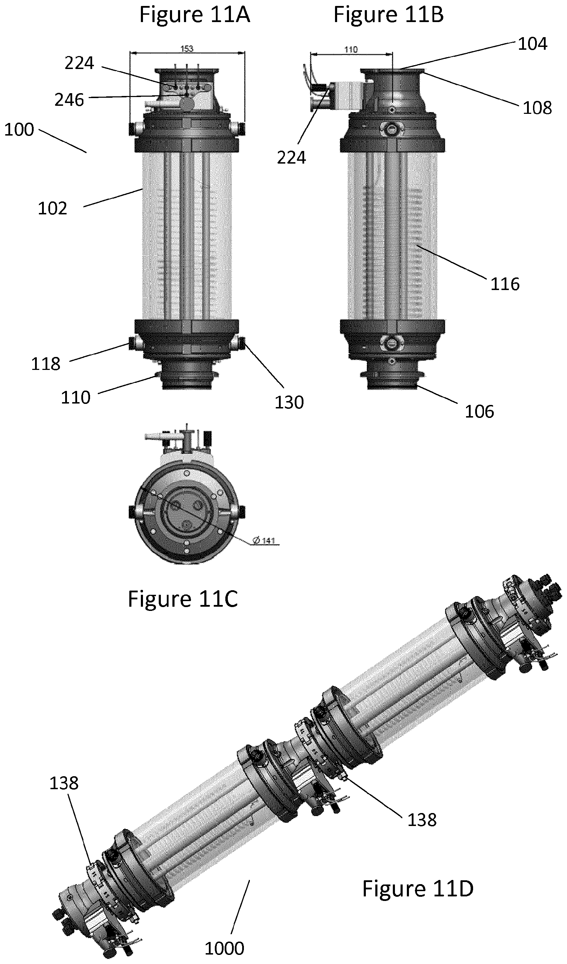

A respective flange 108;110 extends around the circumference of the top and bottom end cap 104;106. In use the flange 108 is connectable to the flange 110 of a neighbouring device 100 such that the two devices can be connected together end-to-end as will be described later and as is shown in Figures 10 and 11.

Extending through the top cap 104 is a channel 112 which defines a hole to allow reaction fluid to pass through the top cap 104. A corresponding channel 114 extends through the bottom cap 106 to allow reaction fluid to pass therethrough. The channel 112 in the top cap 104 is fluidly connected to the channel 114 in the bottom cap 106 by a tube 116, preferably made of glass, which is located in the space 107 and which preferably extends through the channels 112;114. Together, the channel 112, the tube 116 and the channel 114 allow reaction fluid to pass from outside the device 100 through the top cap 104, through the space 107 and out of the device 100 via the bottom cap 106.

A first retaining means is provided on the top cap 104 which engages with the tube 116 for holding the tube 116 in position within the channel 112. In one embodiment, the retaining means is a collar that grips the outer surface of the tube 116 and which is fastened to the top surface of the top cap 104. Preferably the collar is made of a plastic, such as polyether ether ketone (PEEK), or aluminium.

A second retaining means, similar to the first retaining means, is provided on the bottom cap 106 for holding the tube 116 in position within the channel 114.

The tube 116 is preferably coiled in the space 107 so that the tube is as long as possible inside the space 107.

To help seal the space 107, an O-ring seal 117 is located between the tube 116 and the channels 112;114.

Although not shown in the Figures, a mixing device may be located in the tube 116 to assist with the mixing of any reaction fluid flowing there through. Example mixing devices that may be present include protuberances/recesses located on the inside of the tube, a propeller, baffle, mesh screen, or any form of static mixer located inside of the tube.

An inlet port 118 is provided on the bottom cap 106 to allow the control fluid to be pumped into the space 107. The inlet port 118 extends from a lateral opening 120 located on the side of the bottom cap 106, and defines an L-shaped channel that terminates at an opening 122 in the top surface of the cap 106 that is in fluid communication with the space 107.

A corresponding outlet port 124 is located on the top cap 104 and defines an L-shaped channel which allows the control fluid to pass from the space 107 through the bottom surface of the top cap 104 and out from the device 100 via an opening 126 located on the side of the top cap 104.

A supplementary port 130 is provided in each of the top and bottoms caps 104;106. Each supplementary port 130 can act as supplementary inlet/outlet for the space, or can be connected to an aspirating mechanism (not shown in the Figures) to allow a portion of the working fluid in the space to be aspirated for analysis/sampling, or connected to any form of probe/sensor that measures a property (for instance, but not limited to, the temperature / pressure / composition/ absorption / optical properties / pH / turbidity) of the working fluid.

The top surface of the top cap 104 defines a cavity 134 for receiving a manifold 200. The manifold of Figure 5 takes the form of a block that sits on a top surface of the top cap 104. The manifold block 200 is connected to the top cap by way of a fastening means, such as screws 201, that engage with corresponding holes in the top surface of the top cap 104.

It will be seen from Figure 5 that the manifold 200 has a large surface area that is in contact with the top cap 104. As will be explained later, this ensures a good thermal connection between the manifold 200 and the top cap 104.

The manifold block 200 comprises a first inlet 202 for the receipt of a first reaction fluid, a second inlet 204 for the receipt of a second reaction fluid, a channel 206 where the two reaction fluids are mixed together, and an outlet 208 located at the end of the channel 206. The manifold 200 is releasably connected to the cavity 134 and is located in use such that the outlet 206 from the manifold 200 is in fluid communication with the tube 116 located in the channel 112 from the top cap 104 of the reactor device 100.

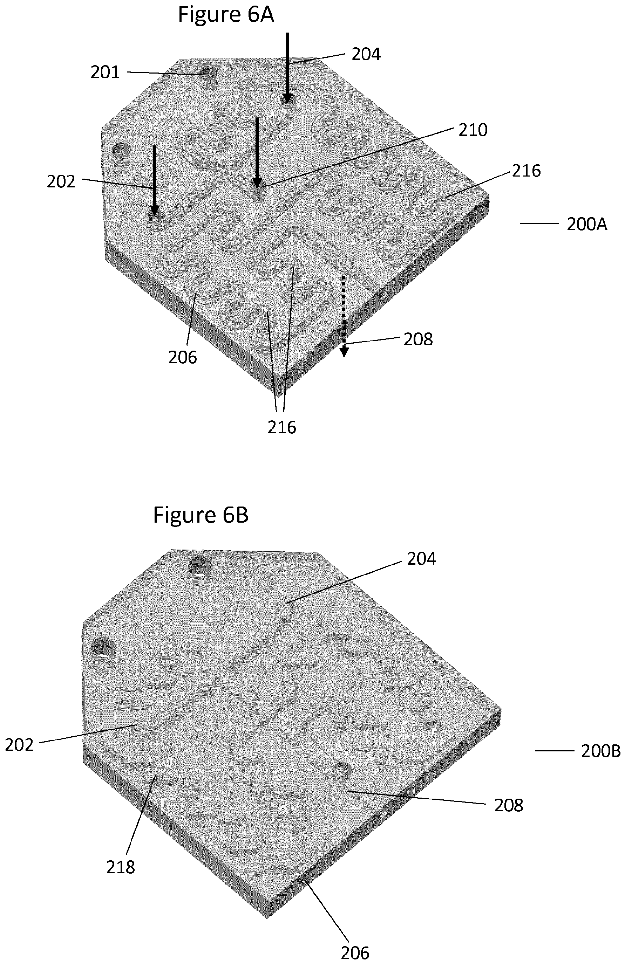

An example construction of the manifold 200 is shown in each of Figures 6A and 6B. Each of these manifolds 200A;200B comprises the first fluid inlet 202, the second fluid inlet 204, the channel 206 and the outlet 208. Each of manifolds 200A;200B additionally comprises a third inlet 210 for the receipt of a third reaction fluid. Each of the fluid inlets extends from the top surface of the manifold 200 and merge at a branch point 212 in the channel 206. Downstream of the branch point 212, the channel 206 adopts a tortuous path 216 comprising several bends and changes in direction. The tortuous path serves to thoroughly mix the reaction fluids together as they pass through the manifold 200. To further improve the mixing in the manifold 200, as shown in Figure 6B the channel 212 preferably comprises portions 218 that split and then recombine.

To operate the device shown in Figures 5 and 6A-6B, the manifold 200 is placed inside and connected to the cavity 134 of the top cap 104. Preheated/precooled control fluid is then circulated through the space 107 via the inlet port 118 and the outlet port 124 such that the space 107 is constantly filled with the control fluid and is held at the required temperature.

As the temperature in the space 107 is brought to the required temperature, the thermally conductive end caps 104 and 106 that are in contact with the control fluid in the space 107 are brought towards the required temperature. Since the manifold 200 is in good thermal contact with the top cap 104, the temperature of the manifold 200 is similarly brought towards the required temperature. Thus the top cap 104 acts as a temperature controlling component for controlling the temperature of the manifold.

Once the device 100 has been sufficiently brought towards the required temperature, reaction fluids are then fed into the inlets of the manifold 200. As the reaction fluids pass through the tortuous path 216 of channel 206, they are thoroughly mixed together and preheated/precooled towards the required temperature due to the preheating/precooling of the manifold 200 by the top cap 104.

At the outlet 208 of the channel 206, the mixed reaction fluid passes into the channel 112 of the top cap 104 and then into the tube 116. As it passes through the tube 116, the surrounding control fluid brings the reaction fluid to the required temperature, thus allowing the reaction fluid to react inside the tube 116. The coil-shape of the tube 116 provides the reaction fluid with as much time to react inside the space 107 as possible.

Once the reaction fluid has reacted inside, and exited, the tube 116, the reaction fluid passes through the channel 114 in the bottom cap 106 and out of the device 100 for further processing.

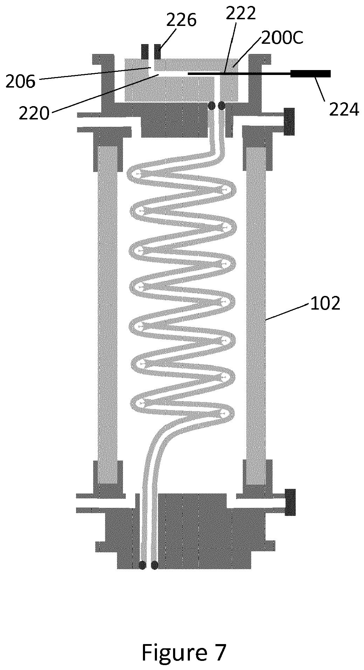

With reference to Figure 7, there is shown a cross section view of a second embodiment reactor device 100. The reaction vessel 102 from Figure 7 is very similar to the reaction vessel from Figure 5. However the manifold 200C from Figure 7 is different to the manifold 200 from Figure 5.

The manifold 200C only comprises one inlet 202 which is operable to connect to a supply of premixed reaction fluid. A sprung seal 226 surrounds the inlet 202 to accommodate for any movement that might occur between the inlet 202 and the supply of premixed reaction fluid (which might, for example, be caused by thermal expansion in the manifold 200C as it heats up in use).

As the manifold 200C receives premixed reaction fluid, the channel 206 in the manifold 206 does not necessarily define a tortuous path and instead may define a straight horizontal portion 220 between the inlet 202 and the outlet 208. A slot 222 is preferably located at one end of the horizontal channel for the receipt of a probe/sensor 224 that measures a property (for instance, but not limited to, the temperature / pressure / composition/ absorption properties / optical properties / pH / turbidity) of the reaction fluid passing through the straight portion 220 of the manifold 200.

Rather than holding a probe/sensor 224, the slot 222 may connect to a valve (not shown in the Figures) which allows a portion of the fluid in the channel 206 to be aspirated.

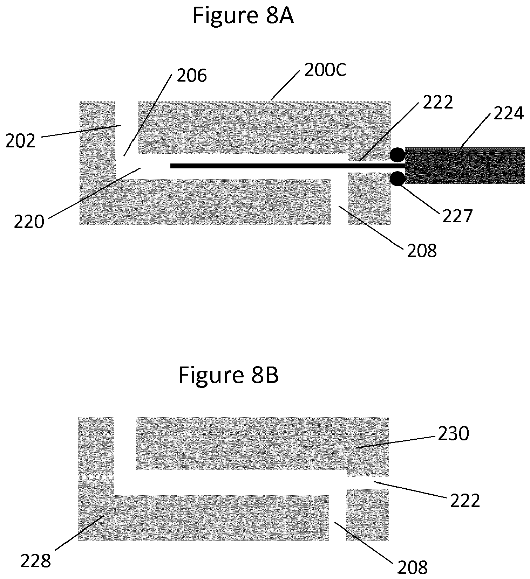

Figures 8A and 8B show in greater detail the structure of the manifold 200C from Figure 7. As shown in Figure 8A, a seal 227 between the probe 224 and the manifold 200C ensures that the channel 206 is sealed. Preferably, the manifold 200C is fabricated from a base layer 228 and a top layer 230, each made of glass. The channel 206, the slot 222, and the outlet 208 are formed in the base layer by wet etching, powder-blasting, milling or ultrasonic machining. The base layer 228 is then diffusion bonded to the top layer 230 to seal the channel 206, the slot 222, and the outlet 208. This fabrication process is the same as that used for making other manifolds herein described that are made of glass.

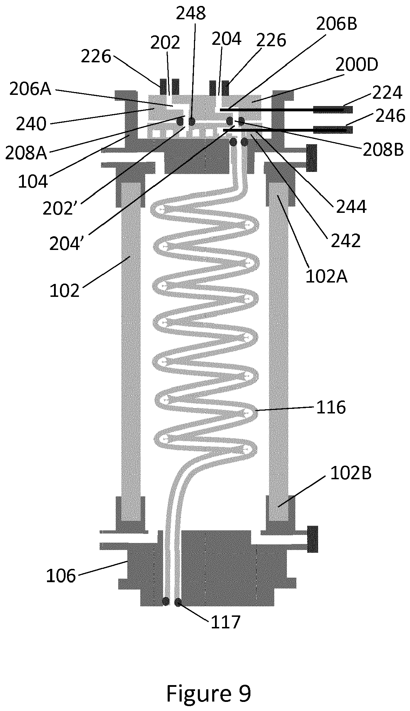

With reference to Figure 9, there is shown a cross section view of a third embodiment reactor device 100 having the reaction vessel 102 shown in Figures 5 and 7, and a third embodiment manifold 200D. The manifold 200D comprises a first portion 240 connected upstream of, and in series with, a second portion 242. The structure of the second portion 242 is identical to the manifold 200 shown in Figure 5.

The first portion 240 of the manifold 200D is the same as the manifold 200C but has two fluid inlets 202;204, two channels 206A;206B extending therethrough, and two fluid outlets 208A;208B. The channels 206A;206B are separate to each other thus allowing two separate reaction fluids to extend through the first portion 240 of the manifold 200D without mixing.

The second portion 242 of the manifold 200D is connected underneath, and downstream of, the first portion 240. The second portion 242 comprises a first and second inlet 202';204' in respective fluid communication with the first and second outlet 208A;208B from the first portion 240. A seal 248 is positioned at the interface of the first inlet 202' and the first outlet 208A, and at the interface of the second inlet 204' and the second outlet 208B, to accommodate for any movement that might occur between the first and second portions 240;242 of the manifold 200D.

To allow for a property of the fluid flowing through the second portion 242 of the manifold 200D to be measured, a slot 244 and a corresponding probe/sensor 246 may be provided in the second portion 242, as shown in Figure 9.

Figure 10 shows a cross section view of a reactor assembly 1000 comprising a first reactor device 100A and a second reactor device 100B connected in series.

The first reactor device 100A comprises a reaction vessel 102 with a modified top and bottom cap 104;106. In each of the ends caps 104;106, there is provided a plurality of channels 112;114, and the reaction vessel 102 comprises a plurality of tubes 116 in parallel with each other. In this way, the reaction vessel 100A is operable to allow different reaction fluids to pass through the reaction vessel 100A independently of each other.

The second reactor device 100B is identical to the reactor device shown in Figure 5 and is located downstream of the first reactor device 100A, and is connected thereto via the flange 110 on the first reactor device 100A being connected to the flange 108 on the second reactor device 100B. A seal 138 between the two flanges 108;110 ensures no leakage between the two connected reactor devices 100A;100B.

In this connected state, each of the reaction fluids passing through the tubes 116 from the first reactor device 100A are fed into respective inlets 202;204 located in the manifold 200 of the second reactor device 100B. Flow of these fluids through the second reactor device 100B is then as described with reference to Figure 5.

From the above description, it will be appreciated that the temperature of the control fluid in the first reactor device 100A need not be the same as the temperature of the control fluid in the second reactor device 100B. In this way, a complex heating regime can be imposed on the reaction fluids as they pass through the different reactor devices 100A;100B of the reactor assembly 1000.

It also will be appreciated that any combination of different reactor devices and manifolds can be selected and stacked in series, as required, to achieve the necessary splitting/combining/mixing/passage of reaction fluids through the manifolds, and to achieve the necessary heating/cooling of the reaction fluids in the tube(s) of each reactor vessel.

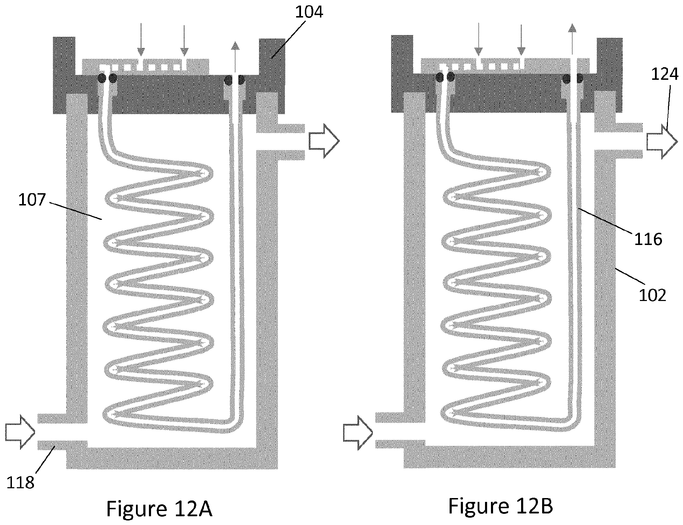

Rather than having the reactor devices 100A;100B connected end-to-end, it will also be appreciated that a reactor device could be provided as shown in Figures 12A and 12B whereby the reaction vessel 102 has a closed bottom instead of a bottom cap. In this case, both ends of the tube(s) 116 located inside the reaction vessel 102 would be connected to a respective inlet and outlet channel in the top cap 104. The outlet channel would then pass out from the top surface of the top cap 104 as shown in Figure 12A. In some cases, as shown in Figure 12B, reaction fluid from the outlet channel may then continue through the manifold via a further channel located therein as shown in Figure 12B.

It can also be seen from Figures 12A and 12B that the inlet and outlet ports 118;124 that control the access of control fluid into the space 107 need not necessarily be located on the end caps 104;106, and could instead be integral with the reaction vessel 102.

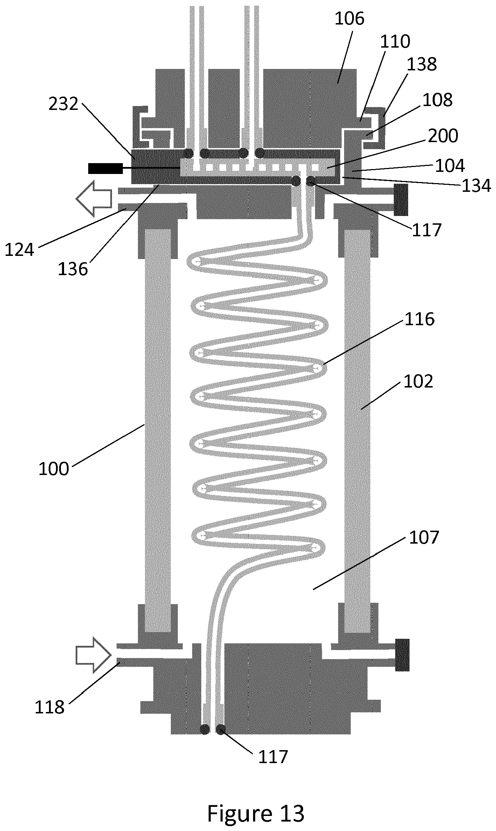

It will also be appreciated that the reactor device 100 could be configured such that the manifold 200 is inserted from the side of the top cap 104, rather than positioned on the top surface of the top cap 104. An example of such a reactor device 100 is shown in Figure 13. In this reactor device 100, the manifold 200 comprises an encapsulating sleeve 232 that matches the shape of the cavity 134 of the top cap 104. One side of the top cap 104 defines an orifice 136 that allows the manifold 200 and its associated sleeve 232 to be inserted into the cavity 134.

As required, a slot and a corresponding probe/sensor may be provided through the side of manifold 200 and its sleeve 232, to allow for a property of the reaction fluid flowing through the manifold 200 to be measured.

In the reactor device 100 shown in Figure 13, when the manifold 200 is located in the cavity 134 of the reactor device 100, and the reactor device 100 is connected to a second reactor device via the flanges 108;110 of the two reactor devices, as shown in Figure 13, friction prevents the manifold 200 being removed from between the top cap 104 of the first reactor device 100 and the bottom cap 106 of the second reactor device. In this way, the manifold 200 does not require fastening to the top cap 104 of the reactor device.

An advantage of the reactor device 100 shown in Figure 13 is that when the reactor device 100 is connected to another reactor device, the two reactor devices do not need to be completely separated to allow the manifold 200 to be removed. Instead, the connection between the flanges 108;110 of the two reactor devices can be loosened, to reduce the frictional forces enough such that the manifold can be slid out from the orifice 136 of the top cap 104 of the first reactor device 100.

## Claims

1. A reactor device for reaction fluid comprising:
a reaction vessel comprising:
an end cap comprising at least one passage for the reaction fluid; and
at least one tube which extends through the reaction vessel, wherein the or each tube comprises a first end, and a second end extending through the reaction vessel and defining an opening providing fluid communication out of the reaction vessel;
wherein the reaction vessel is operable to receive a control fluid outside the at least one tube for controlling the temperature inside the at least one tube;
a manifold connectable to the end cap and comprising at least one channel for the reaction fluid extending between at least one inlet and at least one outlet;
wherein the or each outlet from the manifold is in fluid communication with the first end of a respective tube extending through a passage in the end cap;
wherein the end cap has a thermal conductivity of greater than 1 watt per square meter kelvin to provide a thermal coupling between the control fluid and the manifold.

2. A reactor device according to claim 1 wherein the end cap has a thermal conductivity of greater than 10 watts per square meter kelvin.

3. A reactor device according to any preceding claim, wherein the end cap is detachable.

4. A reactor device according to any preceding claim, wherein the manifold is a block.

5. A reactor device according to any preceding claim, wherein the manifold sits on the end cap.

6. A reactor device according to any preceding claim wherein the reaction vessel comprises an entry port and an exit port for changing the control fluid inside the reaction vessel.

7. A reactor device according to any preceding claim wherein the at least one inlet of each channel comprises a first inlet for receiving a first reaction fluid and a second inlet for receiving a second reaction fluid, wherein each channel comprises a region downstream of the first and second inlets for combining the first and second reaction fluids.

8. A reactor device according to any preceding claim wherein each channel comprises a region defining a tortuous path for reaction fluid flowing through the channel.

9. A reactor device according to any preceding claim wherein each tube forms a spiral inside the reaction vessel.

10. A reactor device according to any preceding claim wherein the internal diameter of each tube is between 1mm-10mm.

11. A reactor device according to any preceding claim further comprising a temperature sensor for measuring the temperature of fluid inside the device, wherein the temperature sensor is located in a channel from the manifold.

12. A reactor device according to any preceding claim wherein the manifold is made of glass.

13. A reactor device according to any preceding claim wherein the manifold comprises a base layer and a top layer which are bonded together, wherein a channel from the manifold is formed at the interface between the two layers.

14. A reactor assembly comprising a first reactor device according to any preceding claim, and a second reactor device for the reaction fluid comprising:
a reaction vessel comprising:
an end cap comprising at least one opening for the reaction fluid; wherein the end cap of the second reactor device is connectable to the end cap from the first reactor device, such that reactor fluid can flow via the at least one opening from the second reactor device into an inlet of a channel of the first reactor device.

15. A reactor assembly according to claim 14 wherein the manifold from the first reactor device is locatable between the end cap of the first reactor device and the end cap of the second reactor device to fluidly connect the two reaction vessels.
